# EUROPEAN PATENT SPECIFICATION

(11) **EP 4 015 858 B1**
(45) Date of publication and mention of the grant of the patent: **09.08.2023**
(21) Application number: 21215305.0
(22) Date of filing: 16.12.2021
(51) Int. Cl.: F16D 3/32, F16D 3/84

(54) **DOUBLE CARDAN JOINT**
DOPPELKARDANGELENK
JOINT À CARDAN DOUBLE

(30) Priority: 16.12.2020 IT 202000031067
(43) Date of publication of application: 22.06.2022
(73) Proprietor: A.M.A. S.p.A., 42018 San Martino in Rio (RE) (IT)
(72) Inventor: ANGELONE, Marco, 66043 CASOLI (CH) (IT); NATALE, Marco, 66043 CASOLI (CH) (IT)
(74) Representative: Manconi, Stefano

(56) References cited:
- DE-A1- 10 037 041
- US-A- 4 610 559
- US-A1- 2002 010 027

## Description

### CROSS-REFERENCE TO RELATED APPLICATIONS

This Patent Application claims priority from Italian Patent Application No. 102020000031067 filed on December 16, 2020.

### TECHNICAL FIELD

The invention relates to a double Cardan joint.

### BACKGROUND ART

In particular, the invention relates to a double Cardan joint of the type comprising a driving fork, which is mounted so as to rotate around a longitudinal axis of its; a driven fork, which is mounted so as to rotate around a longitudinal axis of its; a central body, which is mounted so as to rotate around a longitudinal axis of its; a first cross shaft to connect the driving fork and the central body to one another; and a second cross shaft to connect the driven fork and the central body to one another.

The double Cardan joint further comprises a first protection cap connected to the central body; and a second protection cap connected to the driven fork.

The central body is engaged through the first protection cap in a rotary manner so as to rotate around its own longitudinal axis and the driven fork is engaged through the second protection cap in a rotary manner so as to rotate around its own longitudinal axis.

Known double Cardan joints of the type described above suffer from some drawbacks, which are mainly due to the fact that, in order to allow the driving fork, the driven fork and the central body to rotate around the relative cross shafts, the protection caps have a bellows configuration, are made of a flexible material and, hence, are subjected to a relatively great wear.

Documents: US 2002/010027 A1, US 4 610 559 and DE 100 37 041 A1, discloses double Cardan joints.

### DISCLOSURE OF INVENTION

The object of the invention is to provide a double Cardan joint that is not affected by the aforementioned drawbacks and can be manufactured in a simple and economic fashion.

According to the invention, there is provided a double Cardan joint as claimed in the appended claims.

### BRIEF DESCRIPTION OF THE DRAWINGS

The invention will now be described with reference to the accompanying drawings showing a non-limiting embodiment thereof, wherein:

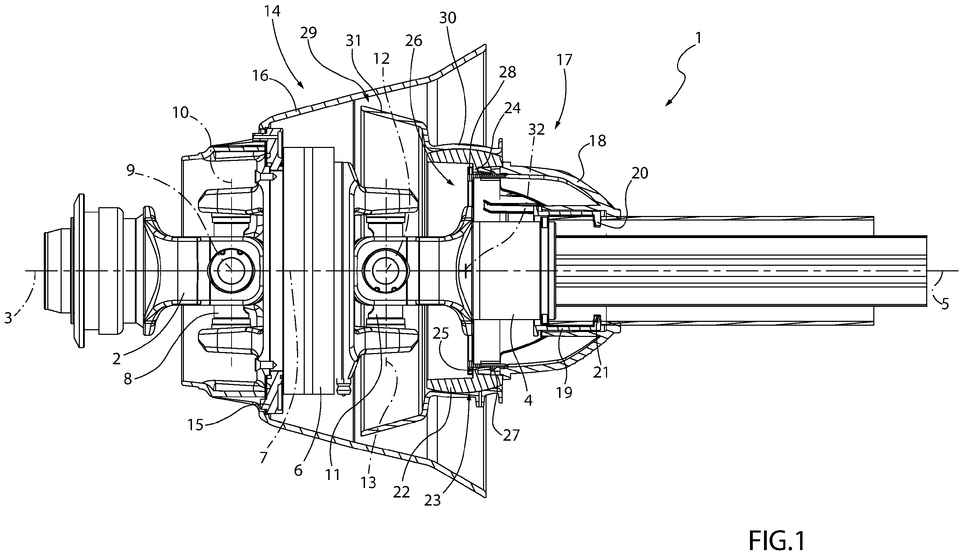

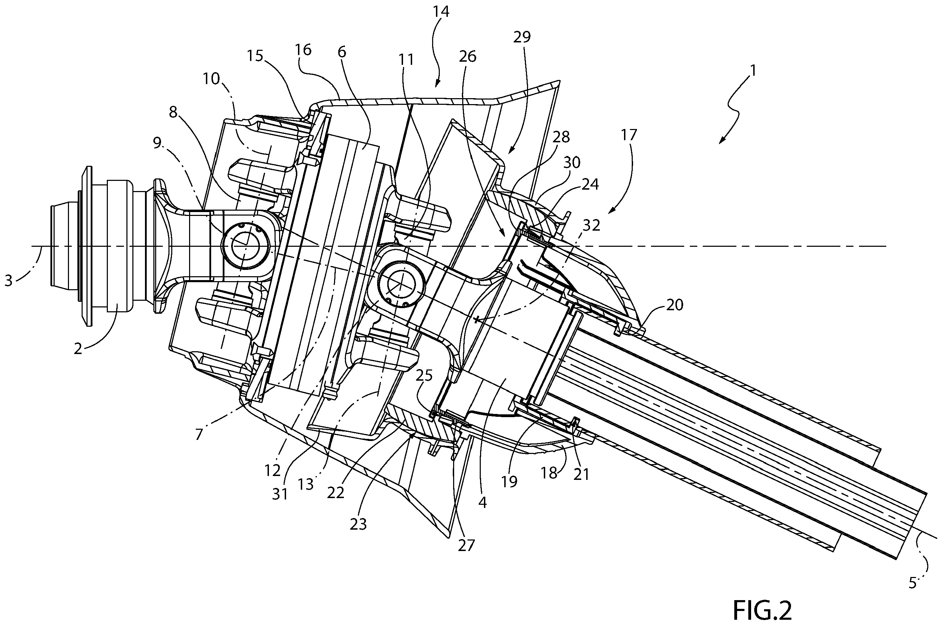

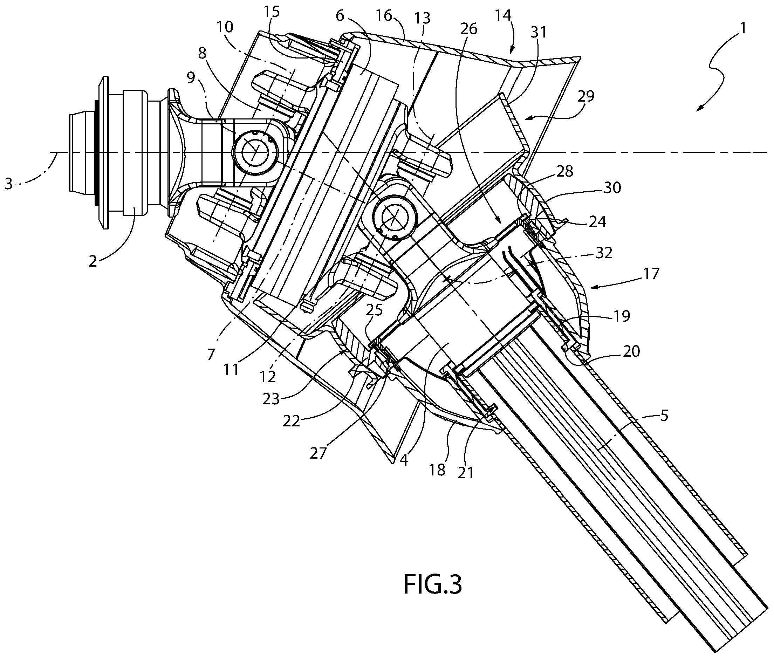

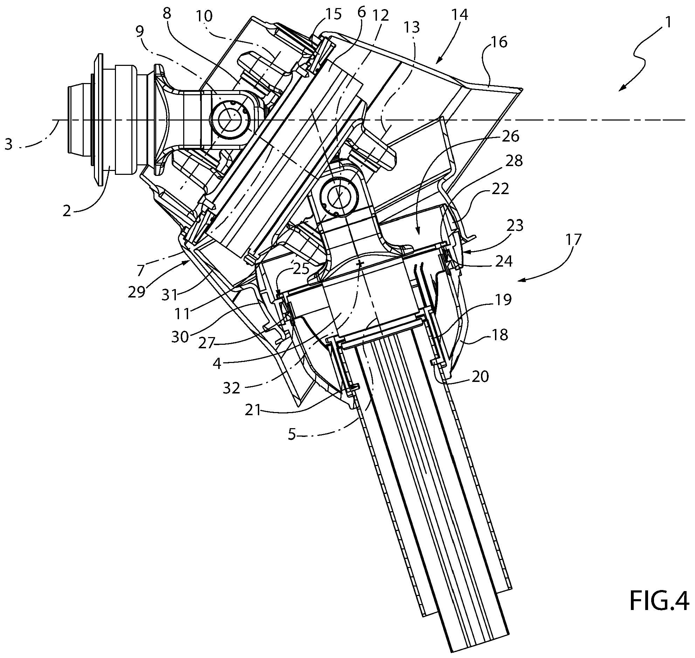

figures 1, 2, 3 and 4 are four schematic side views, with sectional parts and parts removed for greater clarity, of a preferred embodiment of the double Cardan joint according to the invention, which is shown in four different operating conditions.

### BEST MODE FOR CARRYING OUT THE INVENTION

With reference to figures 1, 2, 3 and 4, number 1 indicates, as a whole, a double Cardan joint, in particular to connect an agricultural equipment (which is not shown herein) to an agricultural machinery (which is not shown herein).

The joint 1 comprises a driving fork 2, which is designed to be connected to a power take-off (not shown) of the agricultural machinery (not shown) and is mounted so as to rotate around a longitudinal axis 3 of its; a driven fork 4, which is designed to be connected to the agricultural equipment (not shown) and is mounted so as to rotate around a longitudinal axis 5 of its; and a central body 6, which is interposed between the driving fork 2 and the driven fork 4 and is mounted so as to rotate around a longitudinal axis 7 of its.

The body 6 is connected to the driving fork 2 by means of a first cross shaft 8 in order to allow the body 6 and the driving fork 2 to rotate relative to one another around a rotation axis 9, which is orthogonal to the axis 3, and around a rotation axis 10, which is orthogonal to the axes 7 and 9.

The body 6 is further connected to the driven fork 4 by means of a second cross shaft 11 in order to allow the body 6 and the driven fork 4 to rotate relative to one another around a rotation axis 12, which is orthogonal to the axis 5, and around a rotation axis 13, which is orthogonal to the axes 7 and 12.

The joint 1 is further provided with a first protection device 14 comprising a limit stop ring 15, which extends around the body 6 coaxially to the axis 7, is engaged by the body 6 in a rotary manner, so as to allow the body 6 to rotate around the axis 7, and is moved by the body 6 around the axes 9, 10, 12 and 13.

The device 14 further comprises a cap 16, which is made of a rigid plastic material, has the shape of a truncated cone with a concavity facing the driven fork 4 and is locked on the ring 15.

The joint 1 is further provided with a second protection device 17 comprising a casing 18 with a tubular shape, which extends around the driven fork 4 coaxially to the axis 5, is engaged by the driven fork 4 in a rotary manner, so as to allow the driven fork 4 to rotate around the axis 5, and is moved by the driven fork 4 around the axes 12 and 13.

The casing 18 and the driven fork 4 are connected to one another by a coupling sleeve 19, which is locked inside the casing 18 through interference.

The sleeve 19 is coupled to the driven fork 4 in a rotary and axially fixed manner by means of an annular flange 20, which radially projects towards the inside of the sleeve 19 and is coupled in a snapping manner into a corresponding annular cavity 21 obtained on the driven fork 4.

The device 17 further comprises a support bearing 22, which is fitted onto a free end of the casing 18 coaxially to the axis 5, axially projects from the casing 18 and is delimited by an outer surface 23 with a spherical shape.

The bearing 22 further has an annular flange 24, which is obtained in the area of an intermediate point of the bearing 22, radially projects from an inner surface of the bearing 22 and is in contact with an end face 25 of the casing 18.

The flange 24 and, hence, the bearing 22 are axially and angularly locked against the face 25 of the casing 18 by a locking plug 26 with a cylindrical shape comprising a stem 27, which is locked inside the casing 18 through interference, and a head 28, which axially faces the flange 24.

The device 17 finally comprises a cap 29, which extends inside the cap 16 and is made of a rigid plastic material.

The cap 29 has a first portion 30 with a spherical shape, which is coupled to the surface 23 of the bearing 22, and a second portion 31 with the shape of a truncated cone, which axially projects from the bearing 22 and has a concavity facing the cap 16.

The assembly defined by the casing 18, by the sleeve 19, by the bearing 22, by the plug 26 and by the cap 29 is moved by the driven fork 4 around the axes 12 and 13.

In use, when the portion 31 of the cap 29 comes into contact with the limit stop ring 15, the coupling between the surface 23 of the bearing 22 and the portion 30 of the cap 29 allows the cap 29 to rotate, relative to the bearing 22 and, hence, the driven fork 4, around a rotation axis 32, which is transverse, in particular orthogonal, to the axis 5.

As a consequence, the space defined between the caps 16 and 29 is relatively small and, at most, is equal to a threshold value, in particular a threshold value defined by standards, regardless of the position of the body 6 around the axis 9 and of the driven fork 4 around the axis 12.

## Claims

1. **-** A double Cardan joint comprising a driving fork (2), which is mounted so as to rotate around a longitudinal axis (3) of its; a driven fork (4), which is mounted so as to rotate around a longitudinal axis (5) of its; a central body (6), which is mounted so as to rotate around a longitudinal axis (7) of its; a first cross shaft (8) to connect the driving fork (2) and the central body (6) to one another; a second cross shaft (11) to connect the driven fork (4) and the central body (6) to one another; a first protection cap (16) connected to the central body (6); and a second protection cap (29) connected to the driven fork (4); and **characterized in that** the second protection cap (29) is coupled to the driven fork (4) in a rotary manner so as to rotate, relative to the driven fork (4), around a rotation axis (32), which is transverse, in particular orthogonal, to the longitudinal axis (5) of the driven fork (4).

2. **-** The double Cardan joint according to claim 1 and further comprising a spherical bearing (22), which is engaged by the driven fork (4) in a rotary manner, so as to allow the driven fork (4) to rotate around its own longitudinal axis (5), and by the second protection cap (29) in a rotary manner, so as to allow the second protection cap (29) to rotate around said rotation axis (32) .

3. **-** The double Cardan joint according to claim 2 and further comprising a protection casing (18), which extends around the driven fork (4), is mounted in succession to the second protection cap (29) and is engaged by the driven fork (4) in a rotary manner; the spherical bearing (22) being coupled to the protection casing (18) in an angularly and axially fixed manner.

4. **-** The double Cardan joint according to claim 3 and further comprising a locking ring (26) to lock the spherical bearing (22) on the protection casing (18).

5. - The double Cardan joint according to claim 4, wherein the locking ring (26) is locked on the protection casing (18) through interference.

6. **-** The double Cardan joint according to claim 4 or 5, wherein the spherical bearing (22) is fitted on the protection casing (18) and has a coupling flange (24), which projects from an inner surface of the spherical bearing (22) and is axially locked by the locking ring (26) against a free end (25) of the protection casing (18).

7. - The double Cardan joint according to any one of the preceding claims, wherein the central body (6) is engaged through the first protection cap (16) in a rotary manner so as to rotate around its own longitudinal axis (7) and the driven fork (4) is engaged through the second protection cap (29) in a rotary manner so as to rotate around its own longitudinal axis (5).

8. - The double Cardan joint according to any one of the preceding claims and further comprising a limit stop ring (15), which extends around the central body (6), is engaged by the central body (6) in a rotary manner and is configured to stop the movement of the second protection cap (29) around said rotation axis (32).

9. - The double Cardan joint according to claim 8, wherein the first protection cap (16) is mounted on the limit stop ring (15).

10. **-** The double Cardan joint according to any one of the preceding claims, wherein said first and second protection cap (16, 29) are made of a rigid plastic material.

## Patentansprüche

1. Doppelkardangelenk, aufweisend eine Antriebsgabel (2), die um eine eigene Längsachse (3) drehbar gelagert ist; einer Abtriebsgabel (4), die um eine eigene Längsachse (5) drehbar gelagert ist; einen Zentralkörper (6), der um eine eigene Längsachse (7) drehbar gelagert ist; eine erste Querwelle (8), um die Antriebsgabel (2) und den Zentralkörper (6) miteinander zu verbinden; eine zweite Querwelle (11), um die Abtriebsgabel (4) und den Zentralkörper (6) miteinander zu verbinden; eine erste Schutzkappe (16), die mit dem Zentralkörper (6) verbunden ist; und eine zweite Schutzkappe (29), die mit der Abtriebsgabel (4) verbunden ist; und **dadurch gekennzeichnet, dass** die zweite Schutzkappe (29) mit der Abtriebsgabel (4) drehbar gekoppelt ist, so dass sie sich relativ zur Abtriebsgabel (4) um eine Drehachse (32) dreht, die quer, insbesondere orthogonal, zur Längsachse (5) der Abtriebsgabel (4) verläuft.

2. Doppelkardangelenk nach Anspruch 1, welches ferner ein Gelenklager (22) umfasst, welches mit der Abtriebsgabel (4) drehbar in Eingriff steht, so dass sich die Abtriebsgabel (4) um ihre eigene Längsachse (5) drehen kann, und mit der zweiten Schutzkappe (29) drehbar in Eingriff steht, so dass sich die zweite Schutzkappe (29) um die Drehachse (32) drehen kann.

3. Doppelkardangelenk nach Anspruch 2, welches ferner ein Schutzgehäuse (18) umfasst, welches sich um die Abtriebsgabel (4) herum erstreckt, nachfolgend an der zweiten Schutzkappe (29) angebracht ist und mit der angetriebenen Gabel (4) drehbar in Eingriff steht; wobei das Gelenklager (22) winkel- und axialfest mit dem Schutzgehäuse (18) gekoppelt ist.

4. Doppelkardangelenk nach Anspruch 3, welches außerdem einen Sicherungsring (26) zur Verriegelung des Gelenklagers (22) auf dem Schutzgehäuse (18) umfasst.

5. Doppelkardangelenk nach Anspruch 4, wobei der Sicherungsring (26) durch Eingriff in das Schutzgehäuse (18) verriegelt ist.

6. Doppelkardangelenk nach Anspruch 4 oder 5, wobei das Gelenklager (22) auf dem Schutzgehäuse (18) angebracht ist und einen Kupplungsflansch (24) aufweist, welcher von einer Innenfläche des Gelenklagers (22) absteht und durch den Sicherungsring (26) gegen ein freies Ende (25) des Schutzgehäuses (18) axial verriegelt ist.

7. Doppelkardangelenk nach einem der vorhergehenden Ansprüche, wobei der Zentralkörper (6) um seine eigene Längsachse (7) drehbar durch die erste Schutzkappe (16) und die Abtriebsgabel (4) um ihre eigene Längsachse (5) drehbar durch die zweite Schutzkappe (29) geführt ist.

8. Doppelkardangelenk nach einem der vorhergehenden Ansprüche, welches außerdem einen Anschlagring (15) umfasst, der sich um den Zentralkörper (6) herum erstreckt, drehbar mit dem Zentralkörper (6) in Eingriff steht und so konfiguriert ist, dass er die Bewegung der zweiten Schutzkappe (29) um die Drehachse (32) stoppt.

9. Doppelkardangelenk nach Anspruch 8, wobei die erste Schutzkappe (16) auf dem Anschlagring (15) montiert ist.

10. Doppelkardangelenk nach einem der vorhergehenden Ansprüche, wobei die erste und die zweite Schutzkappe (16, 29) aus einem starren Kunststoffmaterial bestehen.

## Revendications

1. Joint de cardan double comprenant une fourche motrice (2) qui est montée de sorte à tourner autour de son axe longitudinal (3) ; une fourche entraînée (4) qui est montée de sorte à tourner autour de son axe longitudinal (5) ; un corps central (6) qui est monté de sorte à tourner autour de son axe longitudinal (7) ; un premier arbre transversal (8) pour connecter la fourche motrice (2) et le corps central (6) entre eux ; un deuxième arbre transversal (11) pour connecter la fourche entraînée (4) et le corps central (6) entre eux ; un premier capuchon de protection (16) connecté au corps central (6) ; et un deuxième capuchon de protection (29) connecté à la fourche entraînée (4) ; et **caractérisé en ce que** le deuxième capuchon de protection (29) est couplé à la fourche entraînée (4) de manière rotative de sorte à tourner par rapport à la fourche entraînée (4) autour d'un axe de rotation (32) qui est transversal, en particulier orthogonal, à l'axe longitudinal (5) de la fourche entraînée (4).

2. Joint de cardan double selon la revendication 1 et comprenant en outre un roulement sphérique (22) qui est en prise avec la fourche entraînée (4) de manière rotative, de sorte à permettre à la fourche entraînée (4) de tourner autour de son propre axe longitudinal (5), et avec le deuxième capuchon de protection (29) de manière rotative, de sorte à permettre au deuxième capuchon de protection (29) de tourner autour dudit axe de rotation (32).

3. Joint de cardan double selon la revendication 2 et comprenant en outre un carter de protection (18) qui s'étend autour de la fourche entraînée (4), qui est monté à la suite du deuxième capuchon de protection (29) et qui est en prise avec la fourche entraînée (4) de manière rotative ; le roulement sphérique (22) étant couplé au carter de protection (18) de manière fixe angulairement et axialement.

4. Joint de cardan double selon la revendication 3, comprenant en outre un anneau de verrouillage (26) pour verrouiller le roulement sphérique (22) sur le carter de protection (18).

5. Joint de cardan double selon la revendication 4, dans lequel l'anneau de verrouillage (26) est verrouillé sur le carter de protection (18) par interférence.

6. Joint de cardan double selon la revendication 4 ou 5, dans lequel le roulement sphérique (22) est ajusté sur le carter de protection (18) et a une bride de couplage (24) qui fait saillie depuis une surface intérieure du roulement sphérique (22) et est verrouillée axialement par l'anneau de verrouillage (26) contre une extrémité libre (25) du carter de protection (18).

7. Joint de cardan double selon l'une quelconque des revendications précédentes, dans lequel le corps central (6) est mis en prise à travers le premier capuchon de protection (16) de manière rotative de sorte à tourner autour de son propre axe longitudinal (7) et la fourche entraînée (4) est mise en prise à travers le deuxième capuchon de protection (29) de manière rotative de sorte à tourner autour de son propre axe longitudinal (5).

8. Joint de cardan double selon l'une quelconque des revendications précédentes et comprenant en outre un anneau de butée (15) qui s'étend du corps central (6), qui est en prise avec le corps central (6) de manière rotative et qui est configuré pour arrêter le mouvement du deuxième capuchon de protection (29) autour dudit axe de rotation (32) .

9. Joint de cardan double selon la revendication 8, dans lequel le premier capuchon de protection (16) est monté sur l'anneau de butée (15).

10. Joint de cardan double selon l'une quelconque des revendications précédentes, dans lequel lesdits premier et deuxième capuchon de protection (16, 29) sont réalisés en une matière plastique rigide.
